# FASCICULE DE BREVET EUROPEEN

(11) **EP 0 655 402 B1**
(45) Date de publication et mention de la délivrance du brevet: **29.01.1997**
(21) Numéro de dépôt: 93810840.4
(22) Date de dépôt: 30.11.1993
(51) Int. Cl.: B65G 53/60, A24C 5/39

(54) **Ecluse tangentielle**
Tangentialer Abscheider
Tangential separator

(43) Date de publication de la demande: 31.05.1995
(73) Titulaire: FABRIQUES DE TABAC REUNIES S.A., 2003 Neuchâtel-Serrières (CH)
(72) Inventeur: Tallier, Bernard, 2016 Cortaillod (CH)
(74) Mandataire: Fischer, Franz Josef

(56) Documents cités:
- EP-A- 0 317 504
- EP-A- 0 501 910
- GB-A- 335 259

## Description

La présente invention concerne une amélioration apportée à une écluse tangentielle.

Les machines de fabrication de cigarettes sont généralement alimentées en tabac par une canalisation dont une extrémité se trouve directement au-dessus d'une réserve de tabac en vrac disposée dans un bac de stockage et dont l'autre extrémité aboutit à une partie d'entrée de la machine. Le tabac est transporté par aspiration d'un courant d'air provenant d'une turbine aspirant à travers la partie d'entrée de la machine puis la canalisation mentionnée ci-dessus. La partie d'entrée de la machine comprend généralement une écluse.

L'air ayant servi au transport, doit être éliminé du flot de brins de tabac avant que celui-ci ne passe dans la machine de fabrication de cigarettes. Cette opération, assez délicate afin de ne pas endommager les brins de tabac, est réalisée dans l'écluse mentionnée plus haut. Après passage de l'écluse, le tabac, débarrassé de l'air ayant servi à le transporter, passe dans un distributeur à palettes assurant l'étanchéité atmosphérique entre l'écluse et la suite de la machine. La régulation de la quantité de tabac fournie à la machine à cigarettes est faite par commande d'un clapet disposé dans la tubulure entre la turbine d'aspiration et la sortie d'air de l'écluse, réglant ainsi le débit de l'air servant à transporter le tabac.

Si le principe de l'écluse tangentielle est déjà connu, apportant d'excellents résultats en diminuant fortement les risques d'endommagement des brins de tabac, les écluses tangentielles existantes ont néanmoins l'inconvénient d'avoir une aspiration de l'air se faisant selon une direction privilégiée, c'est-à-dire selon la direction d'extraction de l'air hors de l'écluse, ce qui provoque une répartition inégale du tabac à l'intérieur de l'écluse et par conséquent une répartition inégale dans le distributeur qui la suit immédiatement. En effet les brins de tabac auront tendance à s'ammonceler vers l'extrémité de l'écluse proche de l'aspiration, laissant l'autre extrémité relativement moins chargée de tabac. Vu que le passage du tabac entre l'écluse et le distributeur se fait par gravitation, la répartition restera donc inégale dans le distributeur. Cette inégalité de distribution provoque une dégradation du tabac ainsi qu'une alimentation irrégulière de la machine à cigarettes.

La demande EP-A-0.501.910 décrit une écluse tangentielle comportant deux conduites d'aspiration d'air opposées et dont le tambour d'aspiration est agencé de manière à ce que l'effet d'aspiration varie le long des génératrices d'un élément cylindrique intérieur audit tambour, par une disposition des trous d'aspiration dont la section diminue à partir du centre vers les extrémités de chaque génératrice. Une telle écluse répond bien au problème posé lorsque sa largeur est relativement faible ou alors lorsqu'elle comprend plus d'une conduites d'alimentation en tabac, disposées côte-à-côte. Dans le cas d'une écluse de largeur plus importante, la manière de faire varier l'aspiration du tabac mentionnée dans cette demande ne convient absolument pas.

Le but de l'invention est donc de proposer une écluse munie de moyens permettant une aspiration variable du tabac à l'intérieur du tambour et dont l'effet favorable ne se limite pas seulement aux écluses de faible largeur ou à celles de largeur plus importante mais alimentées par plusieurs conduites parallèles.

Afin d'atteindre ce but, l'écluse tangentielle proposée possède les caractéristiques mentionnées dans les revendications.

L'invention se comprend mieux à partir de la description ci-dessous, à considérer en regard du dessin annexé comportant les figures où:
la figure 1 représente une vue latérale de la partie supérieure de la machine de cigarettes avec l'écluse tangentielle vue en coupe partielle,
la figure 2A représente une vue en coupe selon la ligne II-II de la figure précédente, alors que les figures 2B, 2C et 2D représentent trois autres formes d'exécution, et
la figure 3 représente une vue partielle par dessus de la machine de cigarettes.

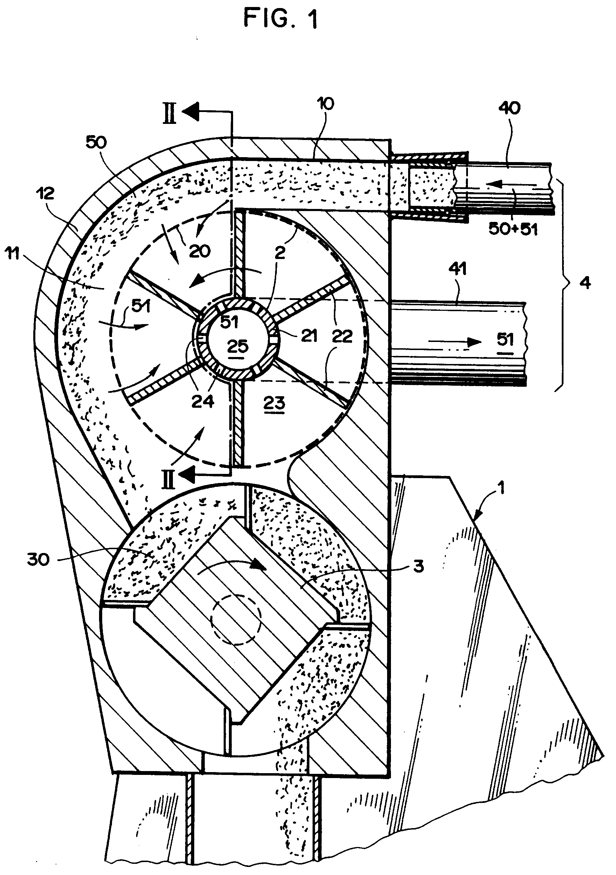

Sur la figure 1, on a représenté uniquement la partie supérieure de la machine de cigarettes 1, comprenant en particulier l'écluse tangentielle selon l'invention comprenant un tambour 2, le distributeur 3 ainsi qu'une partie des canalisations 4 d'amenée de tabac 40 et d'extraction d'air 41. La machine de cigarettes 1 est de fonctionnement connu et ne sera donc pas décrite ici. L'écluse tangentielle comprend tout d'abord un tambour 2 constitué d'un cylindre extérieur 20, creux, de section circulaire et constitué d'un fin treillis métallique; à l'intérieur du cylindre 20, on trouve un cylindre intérieur 21, creux, de section circulaire et qui est coaxial au cylindre extérieur 20. Une pluralité de parois métalliques minces 22, par exemple six, comme représenté sur la figure relie les deux cylindres afin de faire un assemblage rigide du tambour 2. Des chambres d'aspiration 23, six sur la figure, sont donc créées, dont la forme transversale est celle d'un segment de couronne, et qui sont limitées chacune par deux parois minces 22, une portion du cylindre extérieur 20 et une portion du cylindre intérieur 21. Des trous 24, creusés radialement dans les portions du cylindre intérieur 21, assurent une communication entre chacune des chambres d'aspiration 23 et la partie intérieure creuse 25 du cylindre intérieur 21. La disposition des trous 24 sera explicitée ultérieurement. La partie intérieure creuse 25 est reliée, d'une manière qui sera décrite plus bas, à la conduite d'extraction 41, reliée elle-même à une turbine d'aspiration (non représentée). Ainsi, lorsque la turbine est en fonctionnement, la canalisation 40, dont l'extrémité non représentée est proche d'une réserve de tabac en vrac, aspire les brins de tabac 50 et les transporte, mélangés au courant d'air, pour les amener à l'entrée de la machine de cigarettes 1, dans une conduite d'entrée 10. Cette conduite d'entrée 10 débouche dans une chambre semi-circulaire 11 de l'écluse, le tabac 50 étant projeté par son inertie contre la paroi extérieure 12, de forme semi-circulaire, et glisse le long de cette paroi. L'air ayant servi au transport du tabac est aspiré par la turbine mentionnée précédemment et passe donc à travers les mailles du treillis métallique constituant le cylindre extérieur 20. Des poussières de tabac 51, provenant des diverses manipulations que le tabac a subies jusqu'alors, a été lui aussi transporté par la conduite 40 en même temps que les brins de tabac 50; une certaine quantité de ces poussières 51 est aspirée à travers les mailles du treillis du cylindre extérieur 20 en même temps que l'air de transport. L'air de transport, ainsi qu'une certaine quantité de poussières de tabac 51 sont donc séparés du tabac 50 et passent à travers les chambres d'aspiration 23, puis par les trous 24 vers la partie intérieure creuse 25 du cylindre intérieur 21 d'où ils seront aspirés par la conduite d'extraction 41 vers la turbine d'aspiration. La vitesse d'aspiration de l'air, le volume de la chambre semi-circulaire 11 ainsi que la forme de la paroi extérieure 12 sont déterminés en fonction des caractéristiques physiques du tabac 50, afin que celui-ci soit projeté avec une relative douceur contre la paroi 12 et glisse le long de celle-ci sans s'endommager, puis parvienne dans l'une des chambres 30 du distributeur 3 qui, lorsque ladite chambre sera pleine, pivotera d'une portion de tour dans le sens indiqué, afin de laisser tomber le tabac 50 dans une réserve de travail (non représentée) de la machine de cigarettes 1. Les dimensions et formes de la chambre semi-circulaire 11 sont aussi telles que le tabac 50 reste plaqué contre la paroi extérieure 12 et n'est pas aspiré vers le treillis du cylindre 20, où seul l'air ayant servi au transport ainsi qu'une partie des poussières de tabac 51 sont aspirés. Afin de contribuer à cet effet de séparation du tabac 50 et de l'air, sans créer de tourbillons, le tambour 2 est animé d'un lent mouvement de rotation autour de son axe longitudinal, dans le sens indiqué par la flèche. De cette manière, le flux initial qui comprenait l'air de transport, le tabac 50 ainsi que les poussières 51 est décomposé, le tabac 50 et une partie des poussières 51 passant seuls dans le distributeur 3 assurant l'étanchéité atmosphérique avec la partie inférieure de la machine de cigarettes 1, alors que l'air et le reste des poussières 51 passent par le tambour 2 vers la conduite d'extraction 41 comme expliqué précédemment.

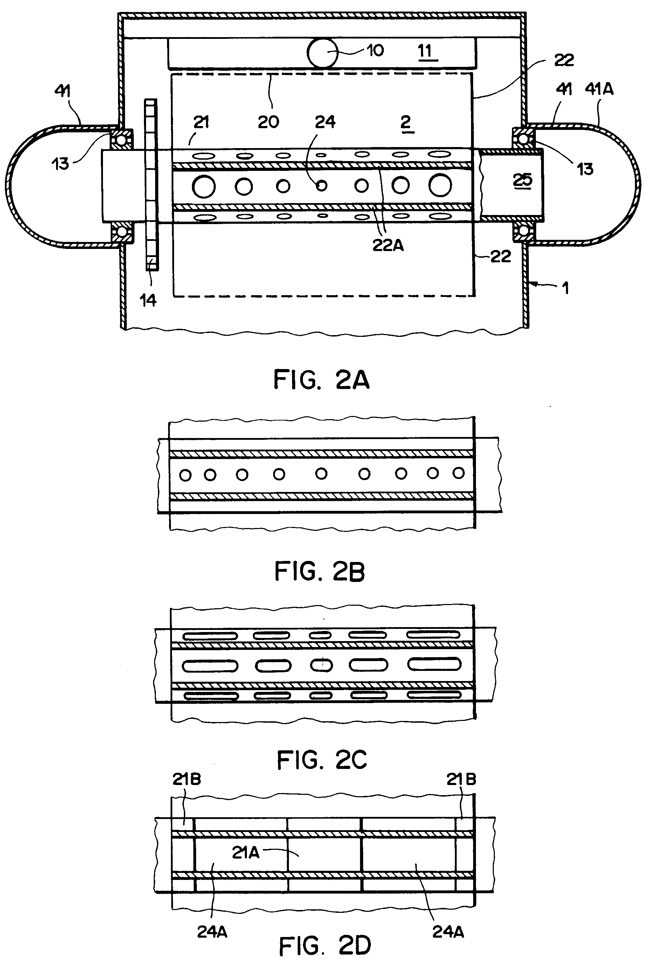

A la figure 2A, on a une coupe faite le long de la ligne II-II de la figure précédente. On y distingue le tambour 2, comprenant le cylindre extérieur 20 en treillis, le cylindre intérieur 21, coaxial au premier, ainsi que les parois de séparation 22 dont deux sont représentées et deux autres représentées par leur amorce 22A sur le cylindre 21. Le conduit d'entrée 10 débouche dans la chambre semi-circulaire 11 dont seule une portion arrière est représentée, le reste de la chambre se trouvant en avant de la figure. Comme indiqué précédemment, le tambour 2 est animé d'un mouvement de rotation autour de son axe longitudinal; pour ceci, le cylindre 21 est prolongé des deux côtés du tambour afin de former un axe de rotation, les extrémités dudit cylindre, respectivement dudit axe, étant chacune fixée à la bague intérieure d'un roulement à billes 13 fixé au bâti de la machine de cigarettes 1. L'entraînement en rotation du tambour 2 est assuré, par exemple, par une roue dentée 14 entraînée par un pignon non représenté. Ainsi, le tambour 2 peut pivoter autour de son axe, étant entraîné en rotation. Les moyens de fixation et d'entraînement du tambour décrits ici ne représentent qu'une forme d'exécution préférentielle, toute autre forme d'exécution convenable étant possible. Chacune des extrémités creuses 25 de l'axe, respectivement du cylindre intérieur 21, débouche, de préférence par l'intermédiaire d'une embout coudé 41A, dans une conduite d'extraction 41, reliée à la turbine d'aspiration.

La paroi de fond de chaque chambre d'aspiration 23, constituée d'une portion du cylindre intérieur 21 est percée de trous 24 alignés sur des génératrices dudit cylindre, la mettant en communication avec l'intérieur creux 25 dudit cylindre. Comme on le voit sur la figure, la répartition de section des trous est irrégulière avec, dans le cas représenté, une section minimum au centre de chaque génératrice et une section maximum vers les deux extrémités. Cette disposition des trous 24 est exactement contraire à celle représentée sur la figure correspondante de la demande citée précédemment; afin de mieux répartir le tabac sur la longueur du cylindre intérieur 21, pour une écluse de forte largeur, il s'agit de diminuer le volume d'aspiration, respectivement le débit d'air aspiré vers la partie centrale du cylindre intérieur 21 et en conséquence de l'augmenter vers ses deux extrémités. Cet effet est obtenu par une répartition des sections des trous 24 comme indiqué, soit une section de passage d'air allant en augmentant vers les extrémités. Dans la forme d'exécution représentée, la variation de section des trous 24 est obtenue par une variation de leur diamètre.

Selon une autre forme d'exécution, représentée à la figure 2B, les trous pourraient tous avoir le même diamètre mais l'espacement entre chacun d'eux pourrait aller en diminuant depuis le centre vers les extrémités. Encore une autre manière de résoudre ce problème représentée à la figure 2C, consisterait à disposer des fentes dont la longueur va en augmentant vers les extrémités du cylindre. Une solution extrême représentée à la figure 2D consiste à ne plus conserver qu'une portion centrale 21A et deux portions d'extrémités 21B du cylindre intérieur précédent, laissant de larges ouvertures 24A disposées de part et d'autre de la portion centrale 21A, pour le passage de l'air et des poussières de tabac.

Toute autre forme d'exécution des ces trous, permettant une aspiration différenciée, le débit d'air allant en augmentant du centre vers les extrémités d'une génératrice du cylindre intérieur 21, est envisageable.

Ainsi, en créant une variation de la puissance d'aspiration le long de l'axe du tambour 2, il est possible d'obtenir une répartition convenable du tabac 50 dans la chambre semi-circulaire de l'écluse tangentielle; la variation du diamètre, respectivement de la section des trous ou la largeur de la portion centrale 21A, est déterminée en fonction des caractéristiques physiques des brins de tabac.

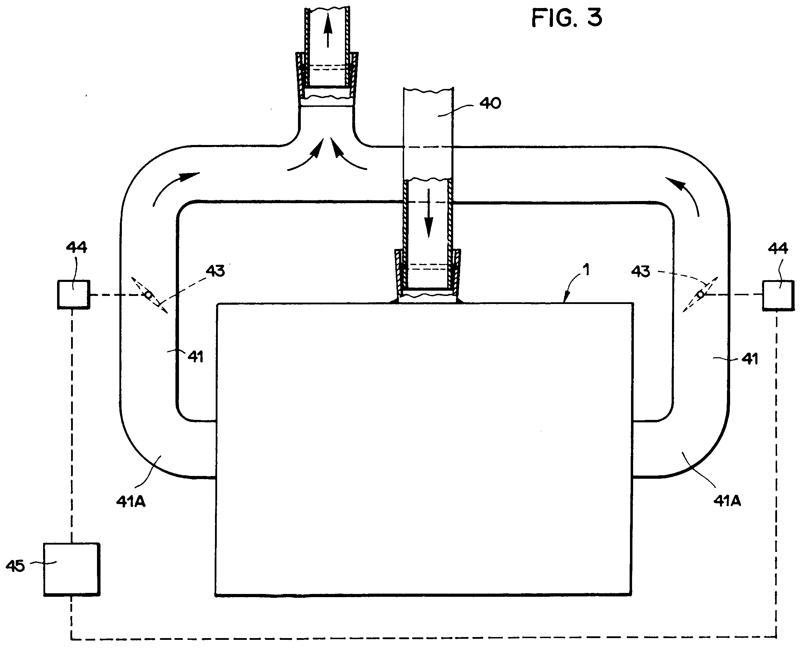

Afin de mieux égaliser les forces d'aspiration de l'air et des poussières de tabac s'exerçant sur les deux extrémités du cylindre 21, il est possible d'équiper ces extrémités ou les conduites d'extraction 41 de moyens de régulation de débit 43 comme on le voit sur la figure 3. Ces moyens de régulation 43 peuvent par exemple être des vannes, commandées individuellement manuellement ou par des moyens motorisés 44 ou de manière différentielle par la commande 45, de manière à équilibrer les débits de sortie d'air de l'écluse 1 afin que le tabac soit équitablement réparti le long du cylindre intérieur 21.

Ainsi, par une conception judicieuse de l'aspiration de l'air à travers l'écluse tangentielle selon l'invention, il est possible d'obtenir une meilleure répartition du tabac à l'intérieur de la chambre semi-circulaire, respectivement dans le distributeur, cet effet n'étant pas limité aux écluses de faible largeur ou alimentées par plus d'une conduite d'alimentation. Les brins de tabac étant moins sollicités, il sont moins endommagés et l'alimentation en tabac de la machine à cigarettes devenant plus régulière, il est possible, en réglant convenablement le débit de l'air de transport, d'obtenir un fonctionnement continu de l'alimentation ne nécessitant pas d'interrompre périodiquement l'aspiration. Ce dernier facteur aide aussi à diminuer la dégradation des brins de tabac.

## Revendications

1. Ecluse tangentielle destinée à séparer des brins de tabac devant être utilisés dans une machine de fabrication d'articles de l'industrie du tabac, de l'air ayant servi à son transport jusqu'à ladite écluse, comprenant un tambour d'aspiration (2) comportant deux orifices d'extraction d'air (41), disposés selon un axe longitudinal dudit tambour, l'air étant extrait selon des sens opposés par chacun desdits orifices, ledit tambour étant constitué de deux éléments cylindriques coaxiaux de section circulaire (20,21), l'élément cylindrique extérieur (20) étant constitué d'un treillis et étant relié à l'élément cylindrique intérieur (21) par une pluralité de parois pleines (22) disposées radialement et définissant entre elles une pluralité de chambres d'aspiration (23), la paroi de chaque chambre d'aspiration constituée par le segment de cylindre faisant partie de l'élément cylindrique intérieur, comportant une pluralité de trous (24;24A) disposés longitudinalement selon une génératrice dudit segment de cylindre intérieur,
caractérisé en ce que
lesdits trous sont repartis de manière irrégulière afin que le débit d'aspiration augmente à partir du centre vers les extrémités de l'élément cylindrique intérieur.

2. Ecluse tangentielle selon la revendication 1, caractérisée en ce que lesdits trous ont une section augmentant à partir du centre vers les extrémités de l'élément cylindrique intérieur.

3. Ecluse tangentielle selon la revendication 2, caractérisée en ce que lesdits trous sont de section circulaire, leur diamètre augmentant à partir du centre vers les extrémités de l'élément cylindrique intérieur.

4. Ecluse tangentielle selon la revendication 1, caractérisée en ce que lesdits trous sont de section circulaire constante, leur espacement diminuant à partir du centre vers les extrémités de l'élément cylindrique intérieur.

5. Ecluse tangentielle selon la revendication 2, caractérisée en ce que lesdits trous sont en forme de fentes allongées, leur longueur augmentant à partir du centre vers les extrémités de l'élément cylindrique intérieur.

6. Ecluse tangentielle selon la revendication 1, caractérisée en ce que lesdits trous sont constitués de deux ouvertures (24A) faites sur tout le pourtour de deux portions de l'élément cylindrique intérieur disposées de chaque côté d'une portion centrale (21A) dudit élément de cylindre.

7. Ecluse tangentielle selon l'une des revendications précédentes, caractérisée en ce que les deux dits orifices d'extraction sont reliés chacun à une extrémité de la partie intérieure creuse (25) dudit élément cylindrique intérieur.

8. Ecluse tangentielle selon la revendication 7, caractérisée en ce que chacun desdits orifices d'extraction comprend un organe de réglage du débit d'air (43).

9. Ecluse tangentielle selon la revendication 8, caractérisée en ce que lesdits organes de réglage du débit d'air sont commandés de manière différentielle.

## Claims

1. Tangential separator intended to separate shreds of tobacco to be used in a machine for manufacturing articles of the tobacco industry, air having served to convey it to said separator, including a suction drum (2) comprising two air-exhaust orifices (41), disposed along a longitudinal axis of said drum, the air being exhausted in opposite directions through each of said orifices, said drum being made up of two coaxial cylindrical elements of circular cross-section (20, 21), the outer cylindrical element (20) being made up of a wire netting and being connected to the inner cylindrical element (21) by a plurality of solid walls (22) disposed radially and defining among them a plurality of suction chambers (23), the wall of each suction chamber constituted by the cylindrical segment forming part of the inner cylindrical element, comprising a plurality of holes (24; 24A) disposed longitudinally along a generatrix of said inner cylindrical segment,
characterized in that
said holes are distributed in an irregular way so that the air flow increases starting from the center toward the ends of the inner cylindrical element.

2. Tangential separator according to claim 1, characterized in that said holes have a cross-section increasing starting from the center toward the ends of the inner cylindrical element.

3. Tangential separator according to claim 2, characterized in that said holes are of circular cross-section, their diameter increasing starting from the center toward the ends of the inner cylindrical element.

4. Tangential separator according to claim 1, characterized in that said holes are of uniform circular cross-section, their spacing decreasing starting from the center toward the ends of the inner cylindrical element.

5. Tangential separator according to claim 2, characterized in that said holes are in the form of elongated slots, their length increasing starting from the center toward the ends of the inner cylindrical element.

6. Tangential separator according to claim 1, characterized in that said holes are made up of two openings (24A) made over the whole periphery of two portions of the inner cylindrical element disposed on each side of a central portion (21A) of said cylindrical element.

7. Tangential separator according to one of the preceding claims, characterized in that the two said exhaust orifices are each connected to one end of the hollow interior part (25) of said inner cylindrical element.

8. Tangential separator according to claim 7, characterized in that each of said exhaust orifices includes an air-flow regulating component (43).

9. Tangential separator according to claim 8, characterized in that said air-flow regulating components are controlled differentially.

## Patentansprüche

1. Tangentialer Abscheider zum Separieren von Tabakfasern vor der Verwendung in einer Verarbeitungsmaschine für Artikel der Tabakindustrie von der Luft, die dem Transport bis zum genannten Abscheider diente, mit einer Ansaugtrommel (2), welche zwei Austrittsöffnungen (41) für die Luft umfasst, die entlang einer longitudinalen Achse der genannten Trommel angeordnet sind, wobei die Luft im entgegengesetzten Sinn durch jede der beiden Öffnungen extrahiert wird, und die genannte Trommel aus zwei koaxialen zylindrischen Elementen mit einem kreisförmigen Querschnitt (20, 21) gebildet ist, wovon das äussere zylindrische Element (20) aus einem Gitter gebildet ist und mit dem inneren zylindrischen Element (21) durch eine Mehrzahl von vollen Wandungen (22) verbunden ist, die radial angeordnet sind und zwischen sich eine Mehrzahl von Ansaugkammern (23) bilden und die Wandung von jeder Ansaugkammer, gebildet durch das Zylindersegment, Teil des inneren zylindrischen Elementes ist mit einer Mehrzahl von Löchern (24; 24A), die längs einer Mantellinie des genannten Segmentes des inneren zylindrischen Elementes angeordnet sind, dadurch gekennzeichnet, dass die genannten Löcher unregelmässig verteilt sind, damit die Absaugmenge vom Zentrum gegen die Enden des inneren zylindrischen Elementes hin anwächst.

2. Tangentialer Abscheider nach Anspruch 1, dadurch gekennzeichnet, dass die genannten Löcher einen Querschnitt aufweisen, der vom Zentrum gegen die Enden des inneren zylindrischen Elementes hin anwächst.

3. Tangentialer Abscheider nach Anspruch 2, dadurch gekennzeichnet, dass die genannten Löcher einen kreisförmigen Querschnitt haben, deren Durchmesser vom Zentrum gegen die Enden des inneren zylindrischen Elementes hin anwachsen.

4. Tangentialer Abscheider nach Anspruch 1, dadurch gekennzeichnet, dass die genannten Löcher einen konstanten kreisförmigen Querschnitt haben, deren Abstand sich vom Zentrum gegen die Enden des inneren zylindrischen Elementes hin verkleinert.

5. Tangentialer Abscheider nach Anspruch 2, dadurch gekennzeichnet, dass die genannten Löcher die Form von Längsschlitzen haben, deren Länge vom Zentrum gegen die Enden des inneren zylindrischen Elementes hin anwächst.

6. Tangentialer Abscheider nach Anspruch 1, dadurch gekennzeichnet, dass die genannten Löcher durch zwei Öffnungen (24A) gebildet sind, die auf dem ganzen Umfang zweier Bereiche des inneren zylindrischen Elementes angebracht sind, angeordnet auf jeder Seite eines zentralen Bereiches (21A) des genannten zylindrischen Elementes.

7. Tangentialer Abscheider nach einem der vorhergehenden Ansprüche, dadurch gekennzeichnet, dass jede der genannten beiden Austrittsöffnungen mit einem Ende des inneren hohen Teiles (25) des genannten inneren zylindrischen Elementes verbunden ist.

8. Tangentialer Abscheider nach Anspruch 7, dadurch gekennzeichnet, dass jede der genannten Austrittsöffnungen ein Organ zur Regelung der Luftmenge (43) umfasst.

9. Tangentialer Abscheider nach Anspruch 8, dadurch gekennzeichnet, dass die genannten Organe zur Regelung der Luftmenge in unterschiedlicher Art steuerbar sind.
